# FASCICULE DE BREVET EUROPEEN

(11) **EP 4 264 324 B1**
(45) Date de publication et mention de la délivrance du brevet: **04.11.2026**
(21) Numéro de dépôt: 21836106.1
(22) Date de dépôt: 10.12.2021
(51) Int. Cl.: G01S 17/34, G01S 17/58

(54) **LIDAR COHÉRENT À MODULATION DE FRÉQUENCE AMÉLIORÉ**
VERBESSERTER FREQUENZMODULIERTER KOHÄRENTER LIDAR
IMPROVED FREQUENCY-MODULATED COHERENT LIDAR

(30) Priorité: 17.12.2020 FR 2013477
(43) Date de publication de la demande: 25.10.2023
(73) Titulaire: THALES, 92190 Meudon (FR)
(72) Inventeur: FENEYROU, Patrick, 91767 PALAISEAU (FR); BOURDERIONNET, Jérôme, 91767 PALAISEAU (FR); DOLFI, Daniel, 91400 ORSAY (FR)
(74) Mandataire: Atout PI Laplace
(86) Numéro de dépôt international: PCT/EP2021/085179
(87) Numéro de publication internationale: WO 2022/128782

(56) Documents cités:
- WO-A1-2018/122339
- ABDELAZIM SAMEH ET AL: "Development and Operational Analysis of an All-Fiber Coherent Doppler Lidar System for Wind Sensing and Aerosol Profiling", IEEE TRANSACTIONS ON GEOSCIENCE AND REMOTE SENSING, IEEE, USA, vol. 53, no. 12, 1 December 2015 (2015-12-01), pages 6495 - 6506, XP011668211, ISSN: 0196-2892, [retrieved on 20150904], DOI: 10.1109/TGRS.2015.2442955

## Description

### DOMAINE DE L'INVENTION

La présente invention concerne la mesure des caractéristiques d'un fluide en mouvement (distance, vitesse) avec un lidar cohérent continu à modulation de fréquence.

### ETAT DE LA TECHNIQUE

La mesure d'un fluide en déplacement tel que l'atmosphère, ce qui correspond à mesurer un profil de vent, est classiquement réalisé grâce à l'analyse du décalage Doppler du signal rétrodiffusé par les aérosols présents dans l'atmosphère à l'aide d'un lidar impulsionnel. La mesure temporelle d'un aller/retour d'une impulsion (classe 200 ns) donne l'information de distance d et le décalage doppler associé à cette impulsion donne l'information de vitesse radiale v(d), égale à la projection du vecteur vitesse sur l'axe d'illumination du lidar.

Cette technique du lidar impulsionnel est largement éprouvée et exploitée commercialement (voir par exemple le document EP3026455). Pour certaines applications (par exemple la cartographie de champ de vent pour tireur d'élite), il est nécessaire de disposer d'un système extrêmement compact et léger, quitte à restreindre le niveau d'exigence sur les performances et/ou la portée. Or l'émission d'impulsions conduit à l'utilisation d'amplificateurs fibrés et à des composants fibrés. La réduction de taille de ces systèmes peut être réalisée en utilisant des circuits en photonique intégrée (PIC - Photonic Integrated Circuit) mais la tenue aux flux de tels dispositifs interdit l'utilisation de puissance crête élevée. Il est également fait référence à la demande PCT WO 2018122339 A1, qui décrit un lidar cohérent (FMCW) dans lequel un signal de battement est numérisé puis analysé spectralement (FFT/PSD) après segmentation temporelle et calcul de la moyenne. La distance et la vitesse sont déterminées à partir des fréquences caractéristiques (pics/plateaux) du spectre.

Une solution alternative concerne l'utilisation de lidar continu modulé en fréquence dont l'utilisation est bien connue dans le cadre de mesures de télémétrie/vélocimétrie sur cible dure et qui permet, compte tenu des puissances crête réduites d'utiliser les PIC. Le principe de fonctionnement d'un tel lidar bien connu de l'état de la technique est rappelé ci-dessous.

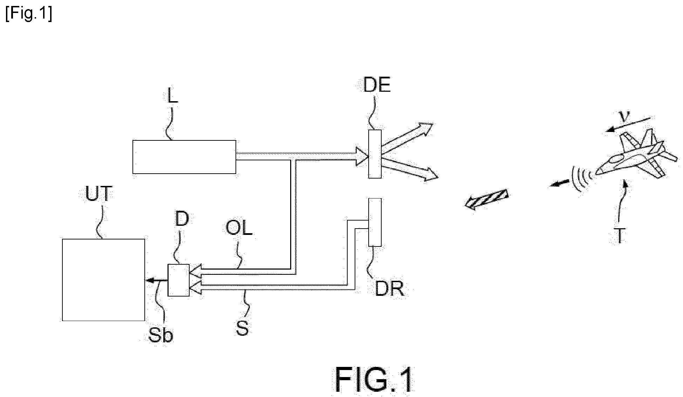

Un lidar cohérent tel qu'illustré figure 1 comprend une source cohérente L, typiquement un laser qui émet une onde lumineuse cohérente (domaine IR, visible ou UV proche), un dispositif d'émission DE qui permet d'illuminer un volume de l'espace, et un dispositif de réception DR, qui collecte une fraction de l'onde lumineuse rétrodiffusée par une cible T. Le décalage de fréquence Doppler ν_{Dop} de l'onde rétrodiffusée est fonction de la vitesse radiale v de la cible T.

A la réception on effectue un mélange entre l'onde lumineuse rétrodiffusée reçue S de fréquence fs et une partie de l'onde émise dénommée onde OL pour « oscillateur local ». L'interférence de ces deux ondes est détectée par un photodétecteur D, et le signal électrique en sortie du détecteur présente un terme oscillant dénommé signal de battement Sb, en plus des termes proportionnels à la puissance reçue et à la puissance d'oscillateur local. Une unité de traitement UT0 numérise ce signal et en extrait l'information de vitesse v de la cible T.

Préférentiellement l'unité de traitement filtre électroniquement le signal de battement Sb dans une bande étroite centrée sur la fréquence nulle, en l'absence de décalage de fréquence.

Pour les lidars cohérents, les dispositifs d'émission et de réception utilisent préférentiellement une même optique (lidar monostatique). Cette caractéristique permet d'obtenir une bonne stabilité mécanique et de réduire l'influence des turbulences atmosphériques à longue distance, les trajets de propagation des ondes incidente et rétrodiffusée étant confondus.

Une solution pour la télémétrie/vélocimétrie par lidar consiste à réaliser un système à modulation de fréquence. Cette technique, classique en radar, trouve un intérêt particulier actuellement compte tenu des progrès des sources lasers fibrées. Grâce à la modulation de fréquence, une analyse temps/fréquence permet de remonter à la distance d de la cible et à sa vitesse v. Ce type de lidar permet également de réaliser une fonction d'anémométrie laser.

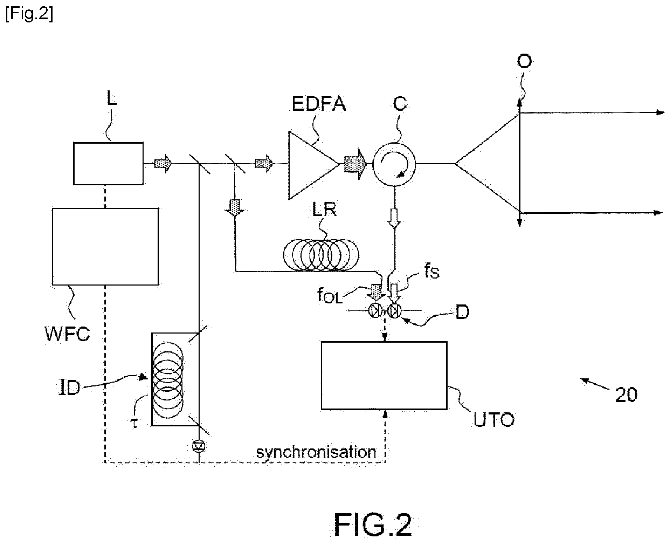

Un exemple d'architecture optique d'un lidar à modulation de fréquence 20 est décrit figure 2. La source cohérente est modulée en fréquence de manière à ce que la fréquence de l'oscillateur local soit modulée selon une fonction prédéterminée dénommée forme d'onde dont le contrôle est assuré par le module WFC, synchronisé avec l'unité de traitement UT0. En combinaison avec le module WFC un dispositif ID, qui est typiquement un interféromètre déséquilibré (longueur des deux bras n'est pas la même), permet de mesurer la fréquence optique en sortie du laser, qui est ensuite injectée dans le module WFC (voir document US10317288).

Le signal optique à l'émission est amplifié par un amplificateur EDFA, l'émission et la réception utilisent une même optique O et sont séparées à l'aide d'un circulateur C. Ce signal optique peut éventuellement être décalé en fréquence, par exemple à l'aide d'un modulateur acousto-optique qui est préférentiellement positionné avant l'amplificateur EDFA mais peut également être positionné sur le trajet de l'oscillateur local. Dans ce cas le filtrage électronique dans l'unité de traitement est effectué autour de la fréquence de décalage. Une ligne à retard LR permet d'égaliser les chemins optiques de l'oscillateur local et du signal d'émission de manière à filtrer, dans le domaine RF, les défauts des composants optiques placés après l'amplificateur EDFA (défaut de cross-talk du circulateur C, imperfections des traitements anti-reflet de l'optique d'émission/réception O,....).

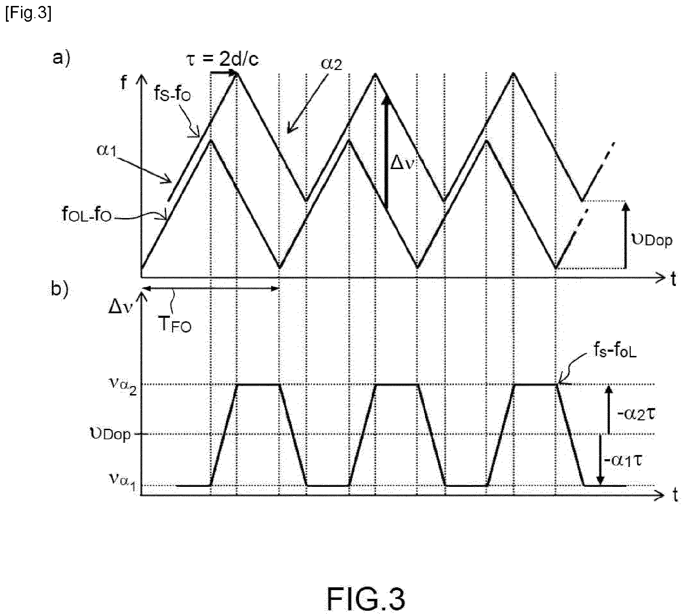

La figure 3 illustre le principe de fonctionnement d'un lidar cohérent à modulation de fréquence selon l'état de l'art.

On se place dans la description ci-dessous dans le cas où la fréquence optique d'émission et celle de l'oscillateur local ne sont pas décalées à l'aide d'un modulateur acousto-optique. La fréquence de l'oscillateur local f_{OL} est modulée linéairement selon deux pentes de fréquence α₁ et α₂ de manière périodique de période T_{FO}. Cette fréquence optique f_{OL} peut s'écrire comme la somme d'une fréquence optique f0 constante (ici la fréquence initiale du laser) et d'une fréquence de modulation dans le domaine radiofréquence dépendante du temps f_{mod}(t) issue de la modulation de la source laser : ${f}_{OL} \left(t\right) = f 0 + {f}_{mod} \left(t\right)$

La figure 3 illustre la variation au cours du temps des fréquences f_{OL}(t) et fₛ(t), la fréquence optique f0 ayant été soustraite pour plus de clarté. Comme illustré sur la figure du dessus a), le signal rétrodiffusé de fréquence fs(t) est décalé temporellement d'un temps τ du fait de la propagation jusqu'à la zone de mesure (cible T) et donc relié à la distance de la cible d, et est décalé en fréquence d'une valeur ν_{Dop} du fait de l'effet Doppler par rapport à la fréquence oscillateur local f_{QL}(t).

Le signal de battement détecté Sb présente une composante de fréquence fs-f_{OL}. La figure du dessous b) illustre l'évolution au cours du temps de fs -f_{OL}. On constate que cette différence de fréquence comprend en fonction du temps deux séries de plateaux aux fréquences caractéristiques να₁ et να₂, directement reliées à la distance de la cible D et à sa vitesse v radiale par les équations : ${ν}_{{α}_{1}} = \frac{2 v}{λ} - \frac{2 {α}_{1} D}{c} et {ν}_{{α}_{2}} = \frac{2 v}{λ} - \frac{2 {α}_{2} D}{c}$ (1)

En mesurant ces deux fréquences caractéristiques να₁ et να₂ du signal de battement Sb on remonte à d et v. La mesure des fréquences caractéristiques s'effectue classiquement en déterminant la densité spectrale de puissance DSP du signal de battement Sb, correspondant typiquement à la norme (module au carré) d'une transformée de Fourier de celui-ci (en pratique une FFT ou transformée de Fourier rapide). Ainsi ici l'information utile est localisée sur les plateaux du signal de la figure 3 b). $DSP = {\left|TF\left[Sb\right]\right|}^{2}$

Cependant, le fait de disposer d'une émission continue sur une cible diffuse (et non plus dure comme précédemment) rend le traitement de signal extrêmement délicat. En effet les informations issues des différentes couches atmosphériques conduisent à des ambiguïtés dans une représentation fréquentielle, puisqu'à un instant donné le signal de battement comprend un continuum de fréquences instantanées issues des rétrodiffusions des différentes couches du fluide.

Un lidar continu à modulation de fréquence a cependant été décrit dans les documents ci-dessous pour une mesure en milieu diffus mais avec un faisceau focalisé, pour connaitre le vent en un plan donné (le plan focal).
- P. Feneyrou et al, "Frequency-modulated multifunction lidar for anemometry, range finding, and velocimetry-1. Theory and signal processing," Appl. Opt. 56, 9663-9675 (2017)
- P. Feneyrou et al, "Frequency-modulated multifunction lidar for anemometry, range finding, and velocimetry-2. Experimental results," Appl. Opt. 56, 9676-9685 (2017)

Mais dans ces documents le traitement utilisé ne permet pas de déduire des mesures le profil du vent à des distances différentes (à moins d'une variation de la focalisation au cours du temps, trop complexe à mettre en œuvre).

Un but de la présente invention est de remédier aux inconvénients précités en proposant une méthode de traitement de signal, et un lidar associé, permettant d'isoler la rétrodiffusion issue des différentes couches de fluide et d'obtenir ainsi une mesure télémétrique/vélocimétrique v(d) en conservant une puissance crête réduite.

### DESCRIPTION DE L'INVENTION

La présente invention a pour objet une méthode de traitement d'un signal issu d'un lidar cohérent comprenant une source cohérente (L) modulée périodiquement en fréquence,
- un signal de battement étant généré par un photodétecteur à partir de l'interférence entre un signal optique dénommé oscillateur local présentant une fréquence d'oscillateur local et un signal optique rétrodiffusé par un fluide en mouvement illuminé par le lidar,
- la fréquence d'oscillateur local étant constituée de la somme d'une valeur moyenne et d'une fréquence de modulation issue de la modulation de la source, la fréquence de modulation étant périodique selon une période de modulation, chaque période comprenant K parties linéaires présentant respectivement K pentes de fréquence indicées αₖ, K étant pair et supérieur ou égal à 2,

ledit signal de battement étant numérisé à une fréquence d'échantillonnage f_{ech} sur une durée au moins égale à M fois la période de modulation, une période de modulation échantillonnée étant indicée j, j variant de 1 à M,
la méthode comprenant les étapes suivantes:
   - **A** on décompose chaque période de modulation indicée j (T_{FO}(j)) en une pluralité d'intervalles indicés i, i variant de 1 à N, et on détermine pour chaque intervalle lij une densité spectrale de puissance élémentaire DSP(i,j) du signal de battement sur ledit intervalle,
   - **B** on détermine une densité spectrale de puissance moyenne sur j DSP(i),
   - **C** les N valeurs de i se répartissant sur T_{FO} en K intervalles Ek, k variant de 1 à K, un intervalle Ek correspondant à une valeur de pente αₖ et comprenant pk valeurs de i, on détermine, pour une pluralité de i compris dans un intervalle Ek avec k impair, une borne inférieure de fréquence, dénommée f_{Bk}(i), de ladite densité de puissance moyenne DSP(i) et une borne supérieure de fréquence, dénommée f_{Hk}(i+pk), de la densité de puissance moyenne DSP(i+pk),
   - **D** on détermine pour chaque i de ladite pluralité, une distance dk(i) et une vitesse du fluide vk(i) à ladite distance à partir desdites bornes inférieure et supérieure de fréquence.

Selon un mode de réalisation K=2 ou K=4 et α₂ₖ=- α₂ₖ₋₁.

Selon un mode de réalisation K est supérieur ou égal à 4, on détermine une pluralité de distances et une pluralité de vitesse, déterminées à partir d'une pluralité d'intervalles Ek avec k impair, et la méthode comprend une étape additionnelle E dans laquelle on détermine une distance et une vitesse finale en effectuant une moyenne sur respectivement la pluralité de distance et la pluralité de vitesse.

Selon un mode de réalisation a pₖ₊₂ = pₖ avec k impair.

Selon un mode de réalisation chaque densité spectrale de puissance élémentaire est déterminée à partir d'une transformée de Fourier rapide (FFT) du signal de battement.

Selon un mode de réalisation un intervalle lij comprend N_{FFT} points d'échantillonnage et on a les relations suivantes :
- pour une résolution en distance δR choisie : $2 . δR = \frac{c . {N}_{FFT}}{{f}_{ech}}$
- pour une résolution en vitesse δV choisie : $\frac{{f}_{ech}}{{N}_{FFT}} = \frac{2 . δV}{λ}$
avec C vitesse de la lumière et λ longueur d'onde de la source cohérente.

Selon un mode de réalisation un intervalle lij comprend N_{FFT} points d'échantillonnage et, pour une vitesse mesurée vₘₐₓ prédéterminée, on a la condition suivante : ${α}_{k} > \frac{2 {v}_{max}}{λ} \frac{{f}_{ech}}{{N}_{FFT}}$ avec λ longueur d'onde de la source cohérente.

Selon un mode de réalisation ledit fluide est l'atmosphère comprenant des particules diffusantes, ladite méthode permettant alors de déterminer un profil de vent selon un axe d'illumination du lidar.

Selon un autre aspect l'invention concerne un Système lidar cohérent comprenant :
- une source cohérente (L) modulée périodiquement en fréquence,
- un dispositif d'émission (DE) d'un signal optique issu de la source cohérente et un dispositif de réception (DR) d'un signal rétrodiffusé par un fluide (F) en déplacement illuminé par le lidar,
- un photodétecteur (D) configuré pour générer un signal de battement (Sb) à partir de l'interférence entre un signal optique dénommé oscillateur local présentant une fréquence d'oscillateur local (f_{OL}(t)) et le signal optique rétrodiffusé, la fréquence d'oscillateur local (f_{OL}(t)) étant constituée de la somme d'une valeur moyenne (f0) et d'une fréquence de modulation (f_{mod}(t)) issue de la modulation de la source cohérente, la fréquence de modulation étant périodique selon une période de modulation (T_{FO}), chaque période comprenant K parties linéaires présentant respectivement K pentes de fréquence (αk), K étant pair et supérieur ou égal à 2,
- une unité de traitement (UT) configurée pour :
   --numériser le signal de battement, à une fréquence d'échantillonnage f_{ech} sur une durée au moins égale à M fois la période de modulation, une période de modulation échantillonnée étant indicée j, j variant de 1 à M,
   --décomposer chaque période de modulation indicée j (TFO(j)) en une pluralité d'intervalles indicés i, i variant de 1 à N, et déterminer pour chaque intervalle lij une densité spectrale de puissance élémentaire DSP(i,j) du signal de battement sur ledit intervalle,
   --déterminer une densité spectrale de puissance moyenne sur j DSP(i),
- les N valeurs de i se répartissant sur TFO en K intervalles Ek, k variant de 1 à K, un intervalle Ek correspondant à une valeur de pente αk et comprenant pk valeurs de i, déterminer, pour une pluralité de i compris dans un intervalle Ek avec k impair, une borne inférieure de fréquence, dénommée fBk(i), de la densité de puissance moyenne DSP(i) et une borne supérieure de fréquence, dénommée fHk(i+pk), de la densité de puissance moyenne DSP(i+pk),
   -- déterminer, pour chaque i de ladite pluralité, une distance dk(i) et une vitesse du fluide vk(i) à ladite distance à partir desdites bornes inférieure et supérieure de fréquence (fBk(i), fHk(i+pk)).

Selon un mode de réalisation le système lidar cohérent comprend en outre un isolateur, un amplificateur pour amplifier la source cohérente et un interféromètre déséquilibré pour mesurer la fréquence optique en sortie du laser, un premier composant de prélèvement pour orienter une fraction de la source vers l'interféromètre déséquilibré et un deuxième composant de prélèvement pour réaliser l'oscillateur local, et les premiers et deuxième composant de prélèvement sont disposés en aval de l'amplificateur.

Selon un mode de réalisation l'isolateur, l'interféromètre déséquilibré et le détecteur sont réalisés en micro-optique et/ou l'interféromètre déséquilibré et le détecteur sont réalisés en circuit photonique intégré.

Selon un autre aspect l'invention concerne un produit programme d'ordinateur, ledit programme d'ordinateur comprenant des instructions de code permettant d'effectuer les étapes de la méthode de traitement selon l'invention.

La description suivante présente plusieurs exemples de réalisation du dispositif de l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :
[Fig 1] La figure 1 déjà citée illustre le principe d'un lidar cohérent.
[Fig 2] La figure 2 déjà citée illustre plus en détail un lidar cohérent à modulation de fréquence monostatique.
[Fig 3] La figure 3 déjà citée illustre le principe de fonctionnement d'un lidar cohérent à modulation de fréquence selon l'état de l'art.
[Fig 4] La figure 4 illustre formes d'onde et fréquence instantanée issue de différentes couches atmosphériques.
[Fig 5] La figure 5 illustre la méthode de traitement selon l'invention.
[Fig 6] La figure 6 illustre le signal temporel Sb détecté sur deux périodes de modulation.
[Fig 7] La figure 7 illustre un exemple de densité spectrale de puissance élémentaire DSP(i,j) déterminée à partir du signal temporel sur l'intervalle lij.
[Fig 8] La figure 8 illustre un spectrogramme représentant les différentes DSP(i), pour une détection parfaite.
[Fig 9] La figure 9 illustre l'évolution temporelle de la fréquence instantanée pour différentes valeurs de la distance de mesure.
[Fig 10] La figure 10 illustre la décomposition d'une période de modulation en K intervalles Ek pour K=2.
[Fig 11] La figure 11 illustre la décomposition d'une période de modulation en K intervalles Ek pour K=4.
[Fig 12] La figure 12 illustre la répartition des intervalles Ek pour K=4 en fonction des variations des fréquences instantanées.
[Fig 13] La figure 13 illustre une variante préférée de la méthode selon l'invention dans laquelle sont déterminées la distance dk(i) et la vitesse vk(i) pour une pluralité de i de l'intervalle Ek.
[Fig 14] La figure 14 illustre un spectrogramme représentant les différentes DSP(i), prenant en compte un bruit de détection.
[Fig 15] La figure 15 illustre la détermination des bornes inférieures et supérieures des densités spectrales de puissance moyenne, correspondant respectivement aux courbes blanches f_{B} et f_{H}.
[Fig 16] La figure 16 illustre les couples (d(i,)v(i)) obtenus avec la méthode selon l'invention et les compare à la courbe théorique choisie pour la simulation.
[Fig 17] La figure 17 décrit une variante préférée de la méthode selon l'invention pour K au moins égal à 4, dans laquelle on détermine pour plusieurs k impairs, un couple de bornes, puis un couple de fréquences caractéristiques, à partir desquelles on obtient un couple (dk(i), vk(i)). Dans cette variante dans une étape additionnelle **E** on détermine la distance et la vitesse finale en effectuant une moyenne sur respectivement la pluralité de distance et la pluralité de vitesse.
[Fig 18] La figure 18 illustre une première variante du lidar selon l'invention.
[Fig 19] La figure 19 illustre une deuxième variante du lidar selon l'invention.

### DESCRIPTION DETAILLEE DE L'INVENTION

Dans l'invention, la partie matérielle est conventionnelle. On utilise un lidar cohérent dont le principe est de faire battre un oscillateur local avec l'onde rétrodiffusée sur un détecteur, tel que décrit figure 2. Ainsi l'invention concerne une méthode de traitement 50 d'un signal issu d'un lidar cohérent comprenant une source cohérente L modulée périodiquement en fréquence. Le signal de battement Sb est généré par un photodétecteur D à partir de l'interférence entre un signal optique dénommé oscillateur local présentant une fréquence d'oscillateur local f_{OL}(t) et un signal optique rétrodiffusé par un fluide F en mouvement (particules diffusantes P) illuminé par le lidar. La fréquence d'oscillateur local f_{OL}(t) est constituée de la somme d'une valeur moyenne f0 et d'une fréquence de modulation fmod(t) issue de la modulation de la source. La fréquence de modulation est périodique selon une période de modulation T_{FO}, chaque période comprend K parties linéaires présentant respectivement K pentes de fréquence indicées αk, k variant de 1 à K, K étant pair et supérieur ou égal à 2.
Pour K=2 on a 2 pentes α1 et α2
Pour K=4 on a 4 pentes α1, α2, α3, α4

Une simplification du traitement est obtenue lorsque les valeurs de pentes vérifient la relation: α₂ₖ = - α₂ₖ₋₁ pour les k concernés.

Soit pour K=2 α2= -α1, et pour K=4 α2= -α1 et α4= -α3.

De manière conventionnelle, le calibrage de cette forme d'onde est fondamental et peut être réalisé à l'aide d'un interféromètre déséquilibré ID. Ici l'optique O illumine un fluide F et non plus une cible dure.

De manière conventionnelle pour un lidar FMCW de télémétrie/vélocimétrie (et à l'inverse du lidar FMCW permettant de réaliser une mesure de vent en un plan donné précité), préférentiellement le faisceau est collimaté avec une taille de mode fixée par la portée de l'équipement.

Les signaux basses puissance du lidar sont :
-L'oscillateur local, qui présente typiquement une puissance de 1 à 10 mW,
-la puissance nécessaire dans l'interféromètre déséquilibré, qui est typiquement de la classe 0,1 à 10 mW,
-le signal rétrodiffusé , qui dépend des caractéristiques du laser et de la cible visée mais il reste très généralement nettement inférieur à 1 mW.

Le signal de forte puissance est le signal issu de l'amplificateur EDFA et utilisé pour illuminer le fluide.

La méthode de traitement du signal temporel de battement Sb selon l'invention est également basée sur la détermination de densités spectrales de puissance, à partir de transformées de Fourrier rapides (FFT). Cependant les caractéristiques de forme d'onde et de transformées de Fourier diffèrent de ce qui est couramment pratiqué pour exploiter une caractéristique de l'interférence qui ne l'était pas jusqu'ici.

Dans la suite de ce document, une détection en phase et en quadrature est préférentiellement implémentée, ce qui simplifie grandement le traitement selon l'invention.

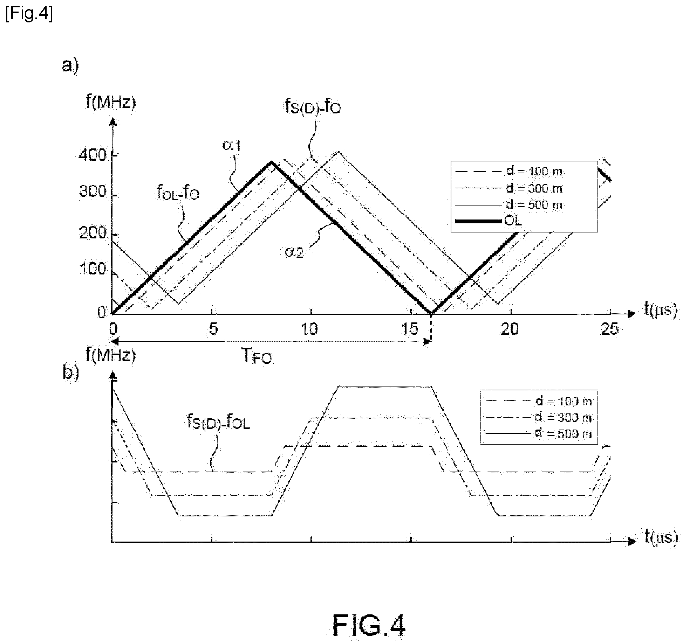

La figure 4 illustre formes d'onde et fréquence instantanée issue de différentes couches atmosphériques, en prenant en compte le retard et le décalage Doppler. Pour le calcul on a T_{FO} = 16 µs, et on a calculé le signal rétrodiffusé pour 3 valeurs de distance, 100, 300 et 500 m.

La figure a) du dessus illustre la fréquence optique émise, identique à celle de l'oscillateur local f_{OL}, et les fréquences optiques fs(D) décalées temporellement du fait du temps de trajet aller-retour jusqu'aux différentes couches de fluide situées à différentes distances D et décalées en fréquence par effet Doppler. Pour plus de lisibilité, ces fréquences ont été décalées de la fréquence optique moyenne f0 du laser. Dans cet exemple on a K =2 soit 2 pentes α1 et α2 avec α2 = - α1, et T_{FO} = 16 µs.

La figure b) du dessous illustre la fréquence instantanée des interférences entre l'oscillateur local OL (fréquece f_{OL}) et le signal S issu des différentes couches atmosphériques. A un instant t le signal de battement est une superposition de signaux de différentes fréquences instantanées [fs(D)-f_{OL}] provenant des différentes distances.

L'idée consiste à utiliser le signal issu des fronts entre les plateaux de fréquence illustrés sur la figure 4 b). Pour résoudre les ambiguïtés temps/vitesse décrites dans l'état de la technique, le principe de la méthode selon l'invention consiste à analyser le signal rétrodiffusé aux instants pour lesquels, après aller-retour jusqu'à une couche atmosphérique proche du lidar, ce signal subit un changement de pente de fréquence alors que, pour des couches atmosphériques plus éloignées, l'onde rétrodiffusée conserve la même valeur de pente de fréquence.

Ainsi, de proche en proche, il est possible de reconstruire le profil de vitesse du fluide selon l'axe lidar (axe d'illumination) v(d). La méthode selon l'invention reprend les briques technologiques du lidar FMCW pour la télémétrie/vélocimétrie sur cible dure, en adaptant la forme d'onde et le traitement de signal afin de déterminer des couples (d, v) pour le lidar illuminant un fluide constitué d'une multitude de couches rétrodiffusantes.

Habituellement, dans le cas d'une cible dure, seuls les plateaux de fréquence sont exploités (voir plus haut), les zones de transition entre les plateaux conduisant à un signal parasite généralement négligeable car réparti sur plusieurs cases fréquentielles. A l'inverse dans la méthode selon l'invention seules ces zones de transition sont exploitées. En effet, sur la figure 4 b), on remarque que le temps de transition entre les plateaux est associé à la distance d'origine du signal. Ainsi, le plateau «bas» de la fréquence du signal provenant de 100 m démarre logiquement avant ceux associés aux couches atmosphériques plus lointaines (cf par exemple autour de t=0.5 µs). De manière symétrique, le plateau « haut » arrive également plus tôt (cf autour de t=8 µs). Ce décalage peut donc être utilisé pour obtenir une résolution spatiale et cette approche est nouvelle. La mesure de vitesse est, de manière conventionnelle, obtenue par l'analyse du décalage Doppler.

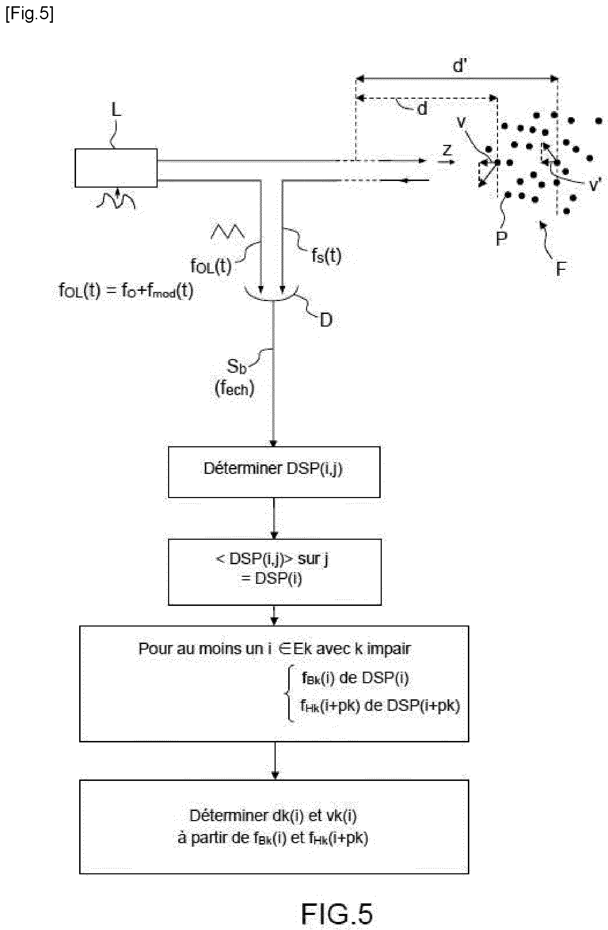

La méthode de traitement selon l'invention est illustrée figure 5. Le signal de battement détecté Sb est tout d'abord et de manière classique numérisé à une fréquence d'échantillonnage f_{ech}. Typiquement cette fréquence est assez élevée, comprise entre 100MHz et 2 GHz. On échantillonne le signal de battement sur une durée, dénommée temps d'intégration TI, au moins égale à M fois la période de modulation T_{FO}, et la période de modulation échantillonnée est indicée j, j variant de 1 à M : T_{FO}(j).

Dans une première étape **A** on décompose chaque période T_{FO}(j) en une pluralité d'intervalles indicés i, i variant de 1 à N (préférentiellement N est pair) et on détermine pour chaque intervalle lij une densité spectrale de puissance élémentaire DSP(i,j) du signal de battement sur l'intervalle. On a N_{FFT} points d'échantillonnage par intervalle lij. Dans les simulations suivantes à titre d'exemple on a f_{ech} = 512 MHz, N=32 points de mesure par période T_{FO}, soit un intervalle lij de durée 0.5µs comprenant N_{FFT} = 256 points d'échantillonnage. Préférentiellement chaque densité spectrale de puissance élémentaire est déterminée à partir d'une transformée de Fourier rapide (FFT) du signal de battement.

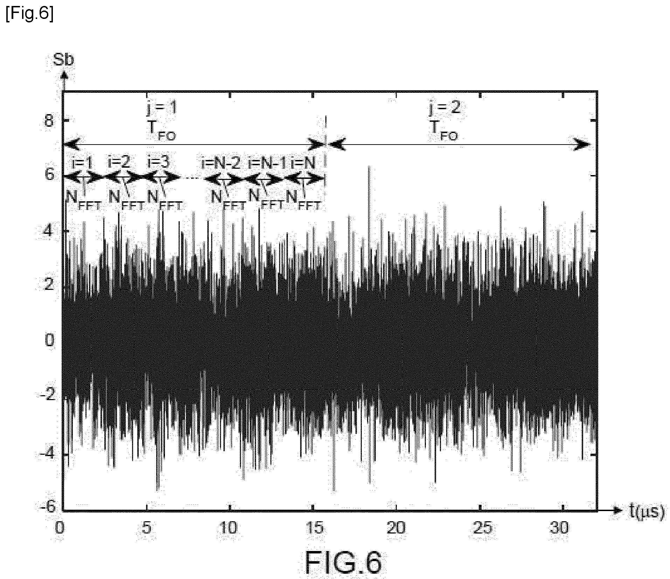

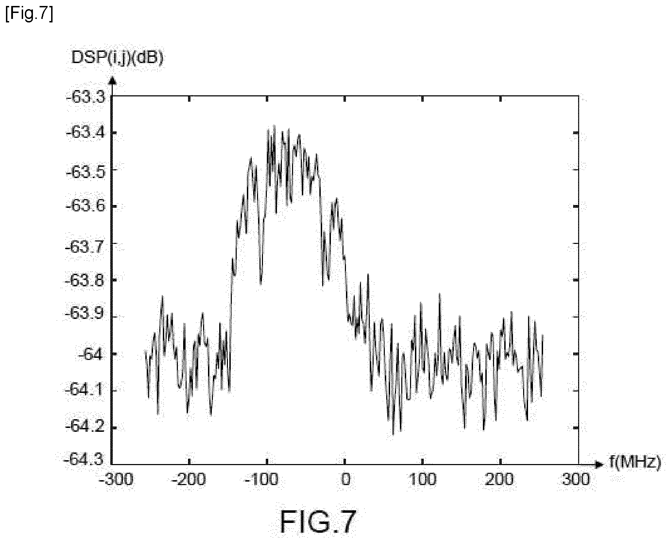

La figure 6 schématise le signal temporel Sb sur deux périodes de modulation en unité arbitraire d'amplitude (compte tenu de la présence possible d'amplificateur de tension) et la figure 7 illustre un exemple de densité spectrale de puissance élémentaire DSP(i,j) déterminée à partir du signal temporel sur l'intervalle lij.

Pour cette simulation (et les suivantes) on a considéré l'atmosphère chargée d'aérosols comme fluide F, une cartographie de densité et de vitesse d'aérosols prédéterminée pour chacune des couches d'air (v=fₜₕₑₒ(d)). A partir de ces données de départ, on a utilisé un logiciel de propagation/diffusion de la lumière pour déterminer les signaux rétrodiffusés et le signal de battement détecté.

Dans une étape **B** on détermine ensuite une densité spectrale de puissance moyenne sur j DSP(i): $DSP \left(i\right) = \left〈DSP\left(i, j\right)\right〉 sur j .$

Typiquement le temps d'intégration est de l'ordre de dizaine de ms, dans l'exemple TI=50 ms soit M= 3125.

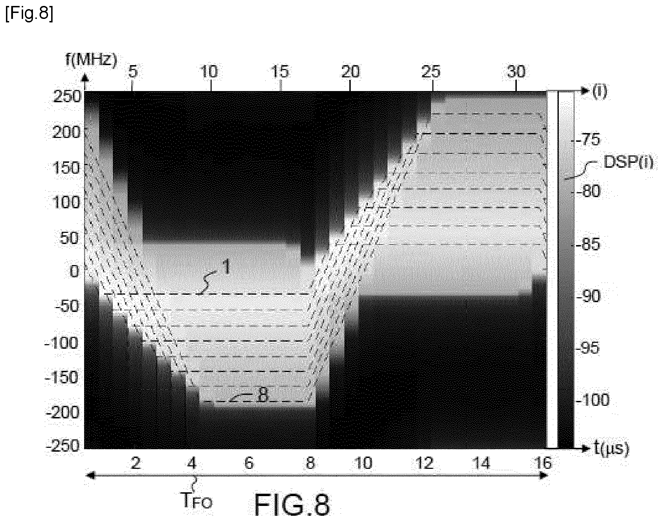

Les différentes DSP(i) peuvent être visualisées par un spectrogramme tel qu'illustré figure 8 dans lequel on a en abscisse les différents intervalles temporels li (échelle en i ou en temps) en ordonnée les valeurs de fréquences et en niveau de gris les différentes valeurs prises par la densité de puissance DSP(i).

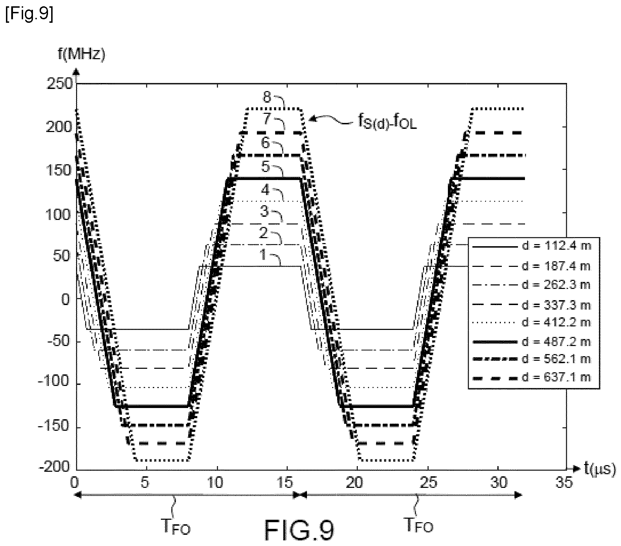

Sur cette figure 8 la détection est supposée parfaite, c'est-à-dire sans bruit. Les courbes 1 à 8 sur la figure 9 illustrent l'évolution temporelle de la fréquence instantanée fs(d) pour 8 valeurs de d entre 100 et 640 m, déterminée par simulation (2 pentes avec α2 = - α1). Ces courbes sont superposées aux DSP(i) sur la figure 8 pour des raisons didactiques. Dans la pratique, l'évolution temporelle des fréquences instantanées fs(d) n'est pas connue.

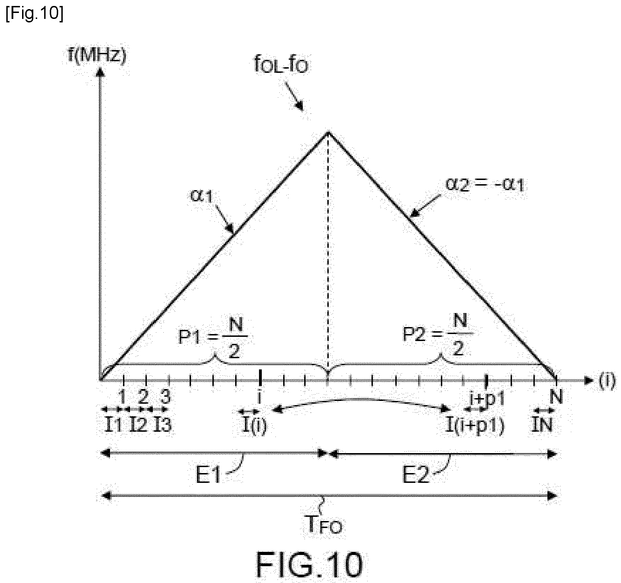

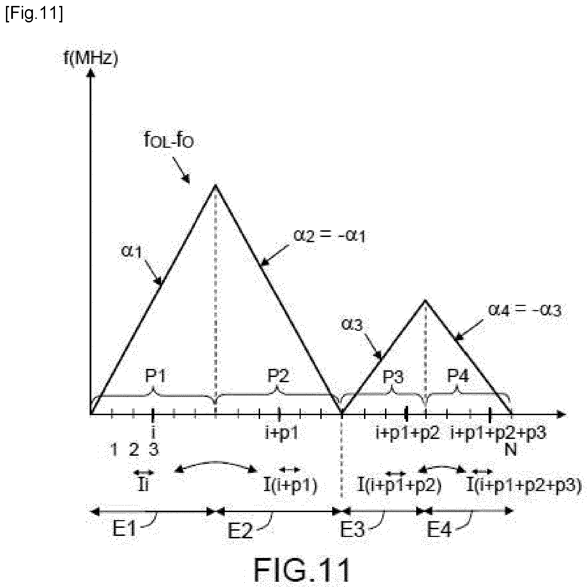

Pour la suite du calcul on répartit les N valeurs de i sur T_{FO} en K intervalles Ek, un intervalle Ek correspondant à une valeur de pente αₖ et comprenant pk valeurs de i, tel qu'illustré figure 10 pour K=2 et figure 11 pour K=4.

Pour K=2 on a seulement 2 intervalles E1 et E2, et p1=p2= N/2 (α2 = - α1), dans l'exemple p1=p2 = 16.

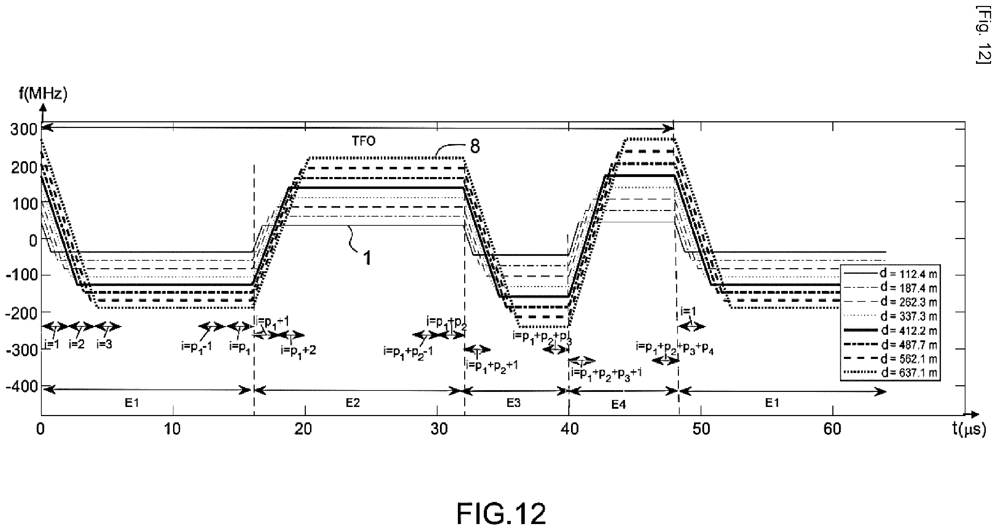

Pour K=4 on a 4 intervalles E1, E2, E3, E4, avec p1=p2 et p3=p4
La figure 12 illustre la répartition des intervalles Ek pour K=4 en fonction des variations des fréquences instantanées (courbes 1 à 8 de la figure 9). Dans cet exemple, p3=p1/2.

Dans une étape **C** on détermine, pour une pluralité de i compris dans l'intervalle Ek avec k impair, une borne inférieure, dénommée f_{Bk}(i), de la densité de puissance moyenne DSP(i) et une borne supérieure, dénommée f_{Hk}(i+pk), de la densité de puissance moyenne DSP(i+pk).

Pour K=2, 2 pentes α2=-α1, un seul intervalle Ek k impair : E1, et pour i∈ E1, on détermine f_{B1}(i) et f_{H1}(i+p1).

Les inventeurs ont mis en évidence que, du fait du décalage temporel des différents plateaux tel qu'expliqué ci-dessus, ces deux bornes inférieure et supérieure sont égales aux fréquences caractéristiques de la mesure Lidar (par couple de pente).

Et donc dans une étape **D** on détermine pour chaque i de ladite pluralité, une distance dk(i) et une vitesse du fluide vk(i) à la distance dk(i) à partir du couple de valeurs (f_{Bk}(i), f_{Hk}(i+pk)). Ainsi i apparait comme une variable muette permettant de déterminer un couple distance/vitesse caractérisant le fluide observé.

Pour 2 pentes les fréquences f_{B}(i) et f_{H}(i+p1) sont respectivement égales aux fréquences ν_{α1} et ν_{α2} de l'équation (1), et on en déduit : $\left\{\begin{matrix}{d}_{i} = \frac{c}{4 {α}_{1}} \left[{f}_{H}\left(i+{p}_{1}\right)-{f}_{B}\left(i\right)\right] \\ {v}_{i} = \frac{λ}{4} \left[{f}_{H}\left(i+{p}_{1}\right)+{f}_{B}\left(i\right)\right] \\ i ∈ \left[1; {p}_{1}\right]\end{matrix}\right.$ (2)

Le fait de décaler la mesure de f_{B} et de f_{H} d'un indice p1 permet de garantir que les deux mesures de fréquence se rapportent au même décalage temporel entre la rupture de pente de fréquence de l'oscillateur local et celle d'une même couche de fluide. Ces deux mesures correspondent donc à une même distance.

L'obtention d'un couple (di,vi) à partir de ces fréquences bornes est un résultat totalement nouveau. Ces relations sont en effet utilisées habituellement pour une unique valeur de distance et de vitesse. Le fait d'utiliser simultanément le décalage temporel d'une rupture de pente de fréquence de la forme d'onde et ces relations pour déterminer une pluralité de distances et de vitesses constitue l'originalité de l'invention. La mesure des plateaux de fréquence, comme réalisé couramment en télémétrie sur cible dure ne peut pas, comme décrit précédemment, être réalisée compte tenu de la superposition de fréquences issues de distance différentes. L'originalité consiste donc à mesurer cette pluralité de portions de plateaux de fréquence sur des intervalles temporels successifs pour lesquels les différentes composantes apparaissent successivement en se basant sur le décalage temporel généré par la propagation de la rupture de pente de fréquence jusqu'à différentes distances.

Ainsi contrairement à l'état de la technique qui recherche les pics de fréquence correspondant, dans le domaine temporel, à l'intégralité des plateaux de fréquence, on utilise ici l'information fréquentielle située sur une portion de plateau, la durée de ces portions de plateau étant fixée par la résolution en distance requise. Le mode de détection diffère donc également puisque, contrairement à la recherche de pic dans le domaine de fréquence utilisée pour la télémétrie sur cible dure, il est dans ce principe, nécessaire de rechercher la fréquence à partir de laquelle les densités spectrales de puissance sont non nulles.

Si on effectue le calcul pour un seul i on aura une mesure unique de couple (d, v).

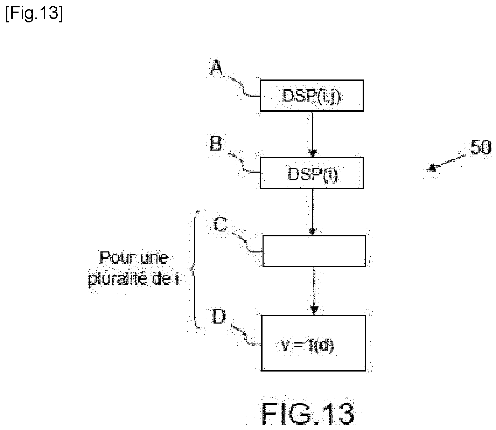

Bien entendu selon une variante préférée illustrée figure 13, la méthode 50 selon l'invention prend tout son intérêt lorsque l'on détermine la distance dk(i) et la vitesse vk(i) pour une pluralité de i de l'intervalle Ek considéré, préférentiellement tous les i, de manière à obtenir une fonction v=f(d).

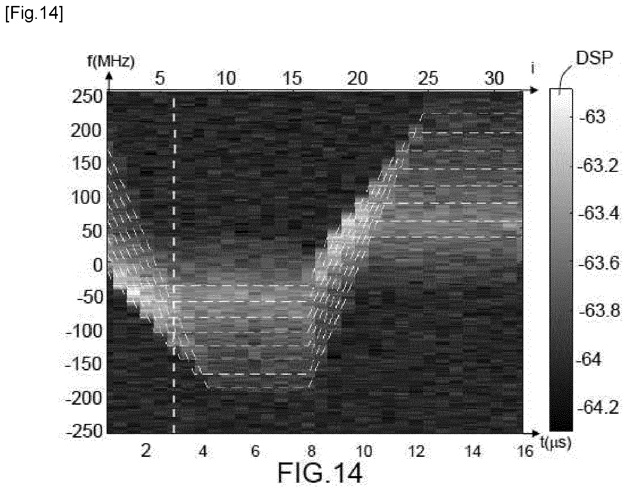

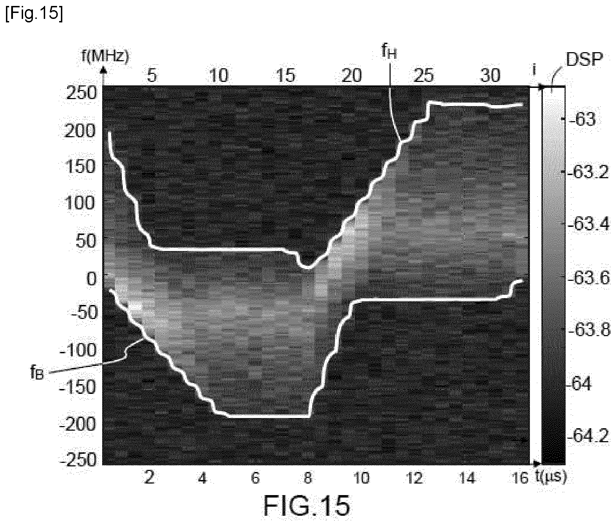

La figure 14 illustre le spectrogramme de la simulation en tenant compte du bruit de détection, qui n'est pas négligeable car le signal de battement est faible et bruité, la sensibilité du système étant généralement limitée par le bruit de photon associé à l'oscillateur local. La figure 15 illustre la détermination des bornes inférieures et supérieures des densités spectrales de puissance moyenne correspondant respectivement aux courbes blanches f_{B} et f_{H}. Ces courbes peuvent être obtenues par extractions de contours ou par une méthode mathématique classique de seuillage.

Seule la première partie de f_{B} est utilisée, i∈[1 ; N/2] et seule la deuxième partie de f_{H} est utilisée, $i ∈ \left[\left(\frac{N}{2}\right)+1;N\right]$, la correspondance entre les deux bornes étant donnée par : $i ′ \left(pour {f}_{H}\right) = i \left(pour {f}_{B}\right) + N / 2$ avec dans l'exemple N/2 =p1=16 (voir figure 10).

Pour la courbe f_{B}, la valeur de i code l'information relative à une distance. Plus la valeur de i augmente plus la fréquence concerne une mesure à plus grande distance. Au-delà d'une certaine distance le signal détecté n'est plus exploitable, ce qui donne la portée lidar auquel on applique la méthode selon l'invention.

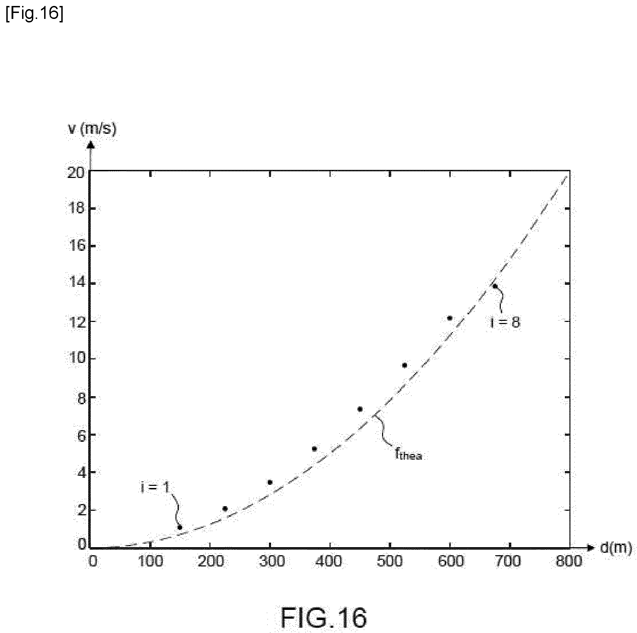

La figure 16 illustre les couples (d(i,)v(i)) obtenus avec les formules (2). Seuls les 8 premiers points sur 16 disponibles sont utilisables et représentés. Au-delà de i=8, correspondant à des distances plus éloignées, le signal de battement est trop faible et bruité et les résultats obtenus deviennent faux. Les points de mesure (d(i),v(i)) déterminés avec la méthode selon l'invention sont comparés à la fonction v=fₜₕₑₒ(d) choisie pour la simulation afin de calculer le signal de battement détecté (voir plus haut). On constate une très bonne correspondance, ce qui valide la pertinence de la méthode 50 selon l'invention.

Les points de mesure de la figure précédente ont été calculés pour une fréquence d'oscillateur local modulée selon deux pentes (α₁, α₂=-α₁) tel qu'illustré figure 4 a) ou figure 10.

Pour K=4 tel qu'illustré figure 11 on a deux valeurs de k impair 1 et 3, on détermine 2 couples de bornes, correspondant aux 4 fréquences caractéristiques de la mesure Lidar dans ce cas. On peut déterminer le couple de bornes pour E1/E2 associé à α1/α2 et /ou le couple de bornes pour E3/E4 associé à α₃,α₂₄
Pour i ∈ E1, k=1, on détermine [f_{B1}(i), f_{H1}(i+p1)] et on en déduit d1(i) et v1(i)
Pour i ∈ E3, k=3, on détermine [f_{B3}(i), f_{H3}(i+p3)] et on en déduit d3(i) et v3(i)

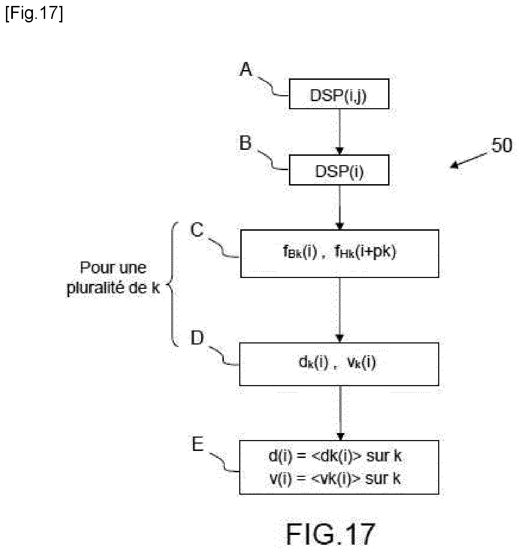

De manière générale pour chaque k impair et le couple de pente associé (αₖ, αₖ₊₁), on a deux fréquences caractéristiques qui permettent de déterminer dk(i) et vk(i). Selon une variante préférée illustrée figure 17 on détermine pour plusieurs k impairs, préférentiellement pour tous les k impairs disponibles, un couple de bornes, puis un couple de fréquences caractéristiques, à partir desquelles on obtient un couple (dk(i), vk(i)). Dans une étape additionnelle **E** on détermine la distance et la vitesse finale en effectuant une moyenne sur respectivement la pluralité de distance et la pluralité de vitesse : $d \left(i\right) = \left〈dk\left(i\right)\right〉 sur k$ $v \left(i\right) = \left〈vk\left(i\right)\right〉 sur k$

Avec K=4, si l'on souhaite déterminer deux couples de bornes respectivement sur E1/E2 et E3/E4, en prenant comme référence la valeur de i appartenant au premier intervalle E1, la relation de correspondance entre la valeur de i∈ E1 et la valeur i"∈ E3 à prendre en compte pour la détermination du couple de bornes est donnée par : $i " \left(pour {f}_{B 3}\right) = i \left(pour {f}_{B 1}\right) + p 1 + p 2$

On détermine ainsi pour E3/E4 f_{B3}(i+p1+p2), f_{H3}(i+p1+p2+p3)] avec ie E1 (voir figure 11).

Dans l'exemple de la figure 11, p1=p2=6 alors que p3=p4= 4. Pour i∈ E1, une moyenne sur les couples [d1(i),v1(i)] et [d2(i+p1+p2), v2(i+p1+p2+p3)] n'est possible que pour les i de 1 à 4 : les points de mesure i=5 et i=6 n'ont pas d'équivalent dans l'intervalle E3. Ainsi lorsque l'on effectue une moyenne sur k, on obtient de l'information pour les points de mesure communs entre tous les intervalles Ek k impair. Préférentiellement pour pouvoir effectuer une moyenne sur k sur tous les points de mesure i disponibles on a pₖ₊₂ = pₖ , soit pour K=4 p1=p3.

En généralisant, pour déduire un couple distance vitesse dₖ, vₖ avec k impair, il faut prendre en compte les DSP(i) avec i dans l'intervalle : $\left[1+{\sum }_{q = 1}^{k - 1} {p}_{q} ;{\sum }_{q = 1}^{k} {p}_{q}\right]$

Où *pₖ* désigne le nombre de FFT associé à l'ensemble Eₖ correspondant à une pente αₖ.

En particulier : ${p}_{k} = \frac{{T}_{k} . {f}_{ech}}{{N}_{FFT}}$

où *Tₖ* désigne la durée de l'intervalle Ek, soit la durée pendant laquelle la pente αₖ est appliquée dans la forme d'onde.

Le décalage en fréquence associé à la distance des couches atmosphériques est supérieur au décalage Doppler maximal à mesurer. Dans ce cas, sous réserve de numéroter les pentes de telle sorte que α₁ soit positif (pente croissante), alors, il faut toujours considérer :
${f}_{B} \left(i+{\sum }_{q = 1}^{k - 1} {p}_{q}\right) et {f}_{H} \left(i+{\sum }_{q = 1}^{k} {p}_{q}\right)$
pour déterminer dₖ, vₖ avec k impair et *i* ∈ [1 ; *p*₁].

Ce qui donne pour le calcul de d(k,i) et v(k,i) : $\left\{\begin{matrix}{d}_{k , i} = \frac{c}{4 {α}_{κ}} \left[{f}_{H}\left(i+{\sum }_{q = 1}^{k} {p}_{q}\right)-{f}_{B}\left(i+{\sum }_{q = 1}^{k - 1} {p}_{q}\right)\right] \\ {v}_{k , i} = \frac{λ}{4} \left[{f}_{H}\left(i+{\sum }_{q = 1}^{k} {p}_{q}\right)+{f}_{B}\left(i+{\sum }_{q = 1}^{k - 1} {p}_{q}\right)\right] \\ i ∈ \left[1; {p}_{1}\right]\end{matrix}\right.$

Ainsi quel que soit le nombre de k sur lequel on effectue la moyenne, et pour le cas pk= p, on a toujours N/p valeurs de i correspondant à un point de mesure d'un couple (d,v).

Selon une application préférée le fluide F est l'atmosphère comprenant des particules diffusantes P (tels des aérosols), la méthode 50 selon l'invention permettant alors de déterminer un profil de vent selon un axe d'illumination du lidar Z. La méthode est utilisable pour des applications terrestres, aéroportées et spatiales de ce type de mesure.

La mesure de profil de vent le long d'un axe à l'aide d'un lidar cohérent continu modulé en fréquence s'applique à titre d'exemple aux tireurs d'élite, aux éoliennes ou à l'optimisation de trajectoires de navires.

Les tireurs d'élite ont besoin d'une mesure de vent le long de l'axe de tir (ainsi que le vent transverse) pour ajuster précisément leurs tirs. Pour obtenir une cartographie vectorielle plus complète du vent on balaye l'angle d'illumination du lidar selon plusieurs axes Z.

Pour cette application au tireur d'élite, la portée typique de l'instrument est de 0.5-2 km sur lesquels le vent doit être mesuré avec une grande précision (typiquement 0.2 m/s). La résolution en distance requise est alors de la classe de 100 m. Ces paramètres (et ceux qui en découlent) sont bien sûr à adapter en fonction de l'application et des systèmes à plus longues portées sont réalisables sous réserve d'accroître la puissance disponible. La méthode 50 proposée est particulièrement adaptée lorsque le besoin en compacité est important.

D'autres applications sont:
-caractérisation de courants sous-marins (fluide est l'eau)
-caractérisation de fluides biologiques, dans un contexte d'imagerie biomédicale (imagerie biomédicale Doppler, imagerie acousto-optique des milieux diffusants).

Le dimensionnement du lidar est dépendant de la résolution souhaitée en distance δR ou en vitesse δV.

Dans la méthode selon l'invention la case fréquentielle de la FFT (résolution) est liée à la résolution vitesse δV (de manière conventionnelle) et à la résolution distance δR (nouveau). En particulier le traitement impose les relations :
- pour une résolution en distance δR choisie : $2 . δR = \frac{c . {N}_{FFT}}{{f}_{ech}}$
- pour une résolution en vitesse δV choisie : $\frac{{f}_{ech}}{{N}_{FFT}} = \frac{2 . δV}{λ}$
avec C vitesse de la lumière et λ longueur d'onde de la source cohérente.

La résolution en décalage Doppler (et donc, de manière proportionnelle, la résolution en vitesse) mesuré est en effet supérieure à la largeur d'une case de fréquence dans l'analyse temps-fréquence effectuée par FFT et la résolution en temps de vol (et donc, de manière proportionnelle, la résolution en distance) est supérieure au temps entre deux échantillons de signal mesuré.

Dans la méthode selon l'invention les résolutions distance et vitesse sont liées par la relation : $δR . δV = C . λ / 4$

La durée d'une pente de fréquence correspond aux nombres de points résolus en distance multiplié par la durée d'une FFT : $\frac{{T}_{FO}}{K} = \frac{2 . {R}_{max}}{δR} . \frac{{N}_{FFT}}{{f}_{ech}} = 2 . \frac{{R}_{max}}{c}$

Avec Rₘₐₓ portée de l'équipement soit la plus grande distance de mesure possible.

La vitesse maximale mesurable par la méthode vₘₐₓ est limitée par les valeurs des pentes αk. Pour une vitesse mesurée vₘₐₓ prédéterminée, on a la condition suivante : ${α}_{k} > \frac{2 {v}_{max}}{λ} \frac{{f}_{ech}}{{N}_{FFT}}$

Une autre limitation sur la résolution distance est liée à la bande d'excursion de fréquence de la forme d'onde qui doit être inférieure à celle liée à la durée de la FFT soit : $\frac{2 . α . δR}{c} < \frac{2 . {f}_{ech}}{{N}_{FFT}}$

Un exemple de dimensionnement est, pour une portée de la classe de Rmax=500 m:
-des FFT de petite taille (typiquement N_{FFT} = 256 points) pour une fréquence d'échantillonnage assez élevée (typiquement f_{ech}=500 MHz). La résolution vitesse δV est alors de la classe de 1 m/s et la résolution distance δR de l'ordre de 75 m à 1.5 µm.
-une période de forme d'onde assez courte,(typiquement T_{FO} = 16 µs pour 2 pentes et p1=p2=16 points de mesure de vitesse),
-des pentes de fréquence assez élevées (typiquement αk > 20 MHz/µs).

Il faut noter que la méthode selon l'invention suppose que les signaux rétrodiffusés sont relativement importants, i.e avec des SNR élevés. Cette méthode est particulièrement adaptée aux couches basses, avec une concentration d'aérosols élevée.

Selon un mode de réalisation et de manière classique le traitement mis en œuvre dans la méthode selon l'invention est codé en FPGA ou dans un ASIC.

Selon un autre aspect l'invention concerne un système lidar cohérent 200 comprenant :
- une source cohérente L modulée périodiquement en fréquence,
- un dispositif d'émission DE d'un signal optique issu de la source cohérente et un dispositif de réception DR d'un signal rétrodiffusé par un fluide F en déplacement illuminé par le lidar,
- un photodétecteur D configuré pour générer le signal de battement Sb à partir de l'interférence entre un signal optique dénommé oscillateur local présentant une fréquence d'oscillateur local f_{OL}(t) et le signal optique rétrodiffusé, la fréquence d'oscillateur local f_{OL}(t) étant constituée de la somme d'une valeur moyenne f0 et d'une fréquence de modulation fmod(t) issue de la modulation de la source cohérente, la fréquence de modulation étant périodique selon une période de modulation T_{FO}, chaque période comprenant K parties linéaires présentant respectivement K pentes de fréquence αk, K étant pair et supérieur ou égal à 2,
- une unité de traitement UT configurée pour mettre en œuvre la méthode revendiquée.

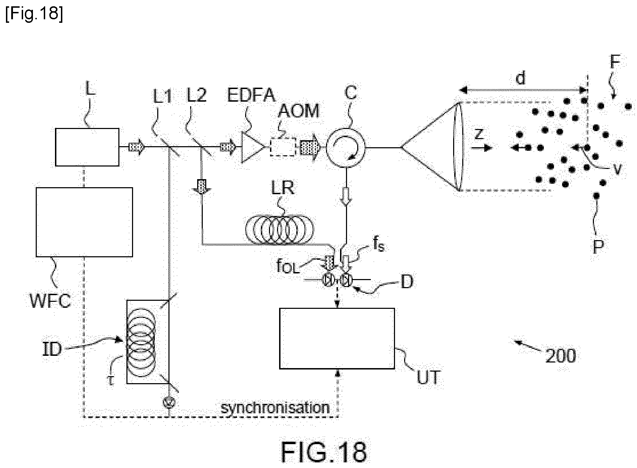

Une première variante du lidar 200 selon l'invention est monostatique et illustrée figure 18. D'un point de vue matériel ce lidar est identique à celui de la figure 2. Il comprend un isolateur C, préférentiellement un circulateur, et amplificateur EDFA pour amplifier la source cohérente. Il comprend optionnellement un modulateur acousto-optique AOM pour décaler en fréquence le signal d'émission.

De manière conventionnelle, le calibrage de la forme d'onde (forme de modulation temporelle de la fréquence émise par la source) est fondamental et est typiquement réalisé à l'aide d'un interféromètre déséquilibré ID, qui mesure la fréquence optique en sortie du laser. Le lidar 200 comprend également un premier composant de prélèvement L1 pour orienter une fraction de la source vers l'interféromètre déséquilibré ID et un deuxième composant de prélèvement L2 pour réaliser l'oscillateur local.

Dans ce schéma, les composants L1 et L2 sont localisés avant l'amplificateur de manière à maximiser la puissance émise et à réduire le bruit que pourrait générer l'amplificateur lors du calibrage de forme d'onde. Cette architecture nécessite une ligne à retard LR insérée sur l'oscillateur local pour compenser le retard optique associé à l'amplificateur (i.e. égaliser les chemins optiques de l'oscillateur local et du signal d'émission). Cette ligne à retard LR est généralement longue (typiquement 10-30 m). Cette première variante de lidar peut être réalisée en technologie fibrée mais l'obtention d'une telle ligne à retard reste problématique en technologie intégrée (du fait des pertes).

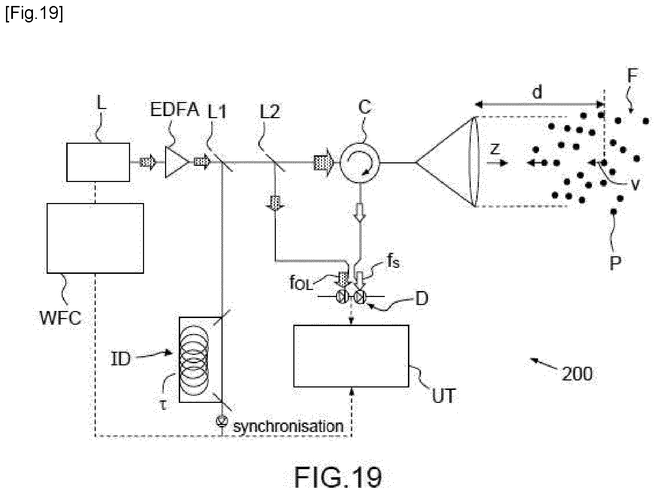

La figure 19 illustre une deuxième variante de lidar selon l'invention. Dans cette variante, le prélèvement de l'oscillateur local est réalisé après l'EDFA, de même que la référence permettant de calibrer la forme d'onde : le premier et le deuxième composant de prélèvement L1et L2 sont disposés en aval de l'amplificateur.

Un avantage de cette deuxième variante est la possibilité d'une intégration plus poussée que pour la première variante. La ligne à retard de la figure 18, dont l'objectif est de compenser le retard associé à la propagation dans l'EDFA, est supprimée. Selon un mode de réalisation les deux lames de prélèvement L1 et L2 ainsi que l'isolateur C sont réalisées en technologie micro-optique (pour laquelle la tenue à la puissance ne limite pas la puissance émise). Le reste des fonctions optiques sont alors utilisées à basse puissance :
- L'oscillateur local présente typiquement une puissance de 1 à 10 mW,
- La puissance nécessaire dans l'interféromètre déséquilibré est typiquement de la classe 1 mW
- Le signal rétrodiffusé dépend des caractéristiques du laser et de la cible visée mais il reste très généralement nettement inférieur à 1 mW.

Selon un mode de réalisation l'interféromètre ID et le détecteur (préférentiellement balancé et préférentiellement de type I/Q) sont alors réalisés en circuit photonique intégré (PIC).

Le module d'émission/réception (tous les composants à l'exception de la source, son amplificateur et le dispositif de contrôle de la forme d'onde WFC, et de l'unité de traitement), est alors très compact, réalisé en technologie PIC ou en technologie hybride micro-optique/PIC.

A terme, il est possible d'envisager l'intégration de fonctions électroniques permettant de réaliser tout ou partie du traitement de signal (intégration de tout ou partie de l'unité de traitement).

Cette intégration poussée garantit un volume minimal du lidar compatible d'une application tireur d'élite par exemple.

## Revendications

1. Méthode de traitement (50) d'un signal issu d'un lidar cohérent comprenant une source cohérente (L) modulée périodiquement en fréquence,
- un signal de battement (Sb) étant généré par un photodétecteur (D) à partir de l'interférence entre un signal optique dénommé oscillateur local présentant une fréquence d'oscillateur local (fOL(t)) et un signal optique rétrodiffusé par un fluide (F) en mouvement illuminé par le lidar,
- la fréquence d'oscillateur local (fOL(t)) étant constituée de la somme d'une valeur moyenne (f0) et d'une fréquence de modulation (fmod(t)) issue de la modulation de la source, la fréquence de modulation étant périodique selon une période de modulation (T_{FO}), chaque période comprenant K parties linéaires présentant respectivement K pentes de fréquence indicées αₖ, K étant pair et supérieur ou égal à 2,
ledit signal de battement étant numérisé à une fréquence d'échantillonnage f_{ech} sur une durée au moins égale à M fois la période de modulation, une période de modulation échantillonnée étant indicée j, j variant de 1 à M,
la méthode comprenant les étapes suivantes:
- **A** on décompose chaque période de modulation indicée j (T_{FO}(j)) en une pluralité d'intervalles indicés i, i variant de 1 à N, et on détermine pour chaque intervalle lij une densité spectrale de puissance élémentaire DSP(i,j) du signal de battement sur ledit intervalle,
- **B** on détermine une densité spectrale de puissance moyenne sur j DSP(i),
- **C** les N valeurs de i se répartissant sur T_{FO} en K intervalles Ek, k variant de 1 à K, un intervalle Ek correspondant à une valeur de pente αₖ et comprenant pk valeurs de i, on détermine, pour une pluralité de i compris dans un intervalle Ek avec k impair, une borne inférieure de fréquence, dénommée f_{Bk}(i), de ladite densité de puissance moyenne DSP(i) et une borne supérieure de fréquence, dénommée f_{Hk}(i+pk), de la densité de puissance moyenne DSP(i+pk),
- **D** on détermine pour chaque i de ladite pluralité, une distance dk(i) et une vitesse du fluide vk(i) à ladite distance, à partir desdites bornes inférieure et supérieure de fréquence (fBk(i), fHk(i+pk)).

2. Méthode selon la revendication 1 dans laquelle K=2 ou K=4 et dans laquelle α₂ₖ=- α₂ₖ₋₁.

3. Méthode selon l'une des revendications précédentes dans laquelle K est supérieur ou égal à 4, et dans laquelle on détermine une pluralité de distances et une pluralité de vitesse, déterminées à partir d'une pluralité d'intervalles Ek avec k impair, ladite méthode comprenant une étape additionnelle E dans laquelle on détermine distance et une vitesse finale en effectuant une moyenne sur respectivement la pluralité de distance et la pluralité de vitesse.

4. Méthode selon la revendication précédente dans laquelle on a pₖ₊₂ = pₖ avec k impair.

5. Méthode selon l'une des revendications précédentes dans laquelle chaque densité spectrale de puissance élémentaire est déterminée à partir d'une transformée de Fourier rapide (FFT) du signal de battement.

6. Méthode selon l'une des revendications précédentes dans laquelle un intervalle lij comprend N_{FFT} points d'échantillonnage et dans lequel on a les relations suivantes :
- pour une résolution en distance δR choisie : $2 . δR = \frac{c . {N}_{FFT}}{{f}_{ech}}$
- pour une résolution en vitesse δV choisie : $\frac{{f}_{ech}}{{N}_{FFT}} = \frac{2 . δV}{λ}$
avec C vitesse de la lumière et λ longueur d'onde de la source cohérente.

7. Méthode selon l'une des revendications précédentes dans laquelle un intervalle lij comprend N_{FFT} points d'échantillonnage et dans laquelle, pour une vitesse mesurée vₘₐₓ prédéterminée, on a la condition suivante : ${α}_{k} > \frac{2 {v}_{max}}{λ} \frac{{f}_{ech}}{{N}_{FFT}}$ avec λ longueur d'onde de la source cohérente.

8. Méthode selon l'une des revendications précédentes dans laquelle ledit fluide (F) est l'atmosphère comprenant des particules diffusantes (P), ladite méthode permettant alors de déterminer un profil de vent selon un axe d'illumination du lidar (Z).

9. Système lidar cohérent (200) comprenant :
- une source cohérente (L) modulée périodiquement en fréquence,
- un dispositif d'émission (DE) d'un signal optique issu de la source cohérente et un dispositif de réception (DR) d'un signal rétrodiffusé par un fluide (F) en déplacement illuminé par le lidar,
- un photodétecteur (D) configuré pour générer un signal de battement (Sb) à partir de l'interférence entre un signal optique dénommé oscillateur local présentant une fréquence d'oscillateur local (f_{OL}(t)) et le signal optique rétrodiffusé, la fréquence d'oscillateur local (f_{OL}(t)) étant constituée de la somme d'une valeur moyenne (f0) et d'une fréquence de modulation (f_{mod}(t)) issue de la modulation de la source cohérente, la fréquence de modulation étant périodique selon une période de modulation (T_{FO}), chaque période comprenant K parties linéaires présentant respectivement K pentes de fréquence (αk), K étant pair et supérieur ou égal à 2,
- une unité de traitement (UT) configurée pour :
*numériser le signal de battement, à une fréquence d'échantillonnage f_{ech} sur une durée au moins égale à M fois la période de modulation, une période de modulation échantillonnée étant indicée j, j variant de 1 à M,
- décomposer chaque période de modulation indicée j (TFO(j)) en une pluralité d'intervalles indicés i, i variant de 1 à N, et déterminer pour chaque intervalle lij une densité spectrale de puissance élémentaire DSP(i,j) du signal de battement sur ledit intervalle,
- déterminer une densité spectrale de puissance moyenne sur j DSP(i),
- les N valeurs de i se répartissant sur TFO en K intervalles Ek, k variant de 1 à K, un intervalle Ek correspondant à une valeur de pente αₖ et comprenant pk valeurs de i, déterminer, pour une pluralité de i compris dans un intervalle Ek avec k impair, une borne inférieure de fréquence, dénommée fBk(i), de la densité de puissance moyenne DSP(i) et une borne supérieure de fréquence, dénommée fHk(i+pk), de la densité de puissance moyenne DSP(i+pk),
- déterminer, pour chaque i de ladite pluralité, une distance dk(i) et une vitesse du fluide vk(i) à ladite distance, à partir desdites bornes inférieure et supérieure de fréquence (fBk(i), fHk(i+pk)).

10. Système lidar cohérent selon la revendication précédente comprenant en outre un isolateur (C), un amplificateur (EDFA) pour amplifier la source cohérente et un interféromètre déséquilibré (ID) pour mesurer la fréquence optique en sortie du laser, un premier composant de prélèvement (L1) pour orienter une fraction de la source vers l'interféromètre déséquilibré (ID) et un deuxième composant de prélèvement (L2) pour réaliser l'oscillateur local,
dans lequel les premiers et deuxième composant de prélèvement (L1, L2) sont disposés en aval de l'amplificateur.

11. Système lidar cohérent selon la revendication précédente dans lequel l'isolateur, l'interféromètre déséquilibré et le détecteur sont réalisés en micro-optique et/ou dans lequel l'interféromètre déséquilibré et le détecteur sont réalisés en circuit photonique intégré (PIC).

12. Un produit programme d'ordinateur, ledit programme d'ordinateur comprenant des instructions de code permettant d'effectuer les étapes de la méthode de traitement selon l'une quelconque des revendications 1 à 8.

## Patentansprüche

1. Verfahren zum Verarbeiten (50) eines von einem kohärenten Lidar stammenden Signals, umfassend eine kohärente Quelle (L), die periodisch frequenzmoduliert wird,
- ein Schwebungssignal (Sb), das von einem Fotodetektor (D) ausgehend von der Interferenz zwischen einem als lokaler Oszillator bezeichneten optischen Signal, das eine lokale Oszillatorfrequenz (fOL(t)) aufweist, und einem optischen Signal erzeugt wird, das durch ein von dem Lidar beleuchtetes, sich bewegendes Fluid (F) zurückgestrahlt wird,
- wobei die lokale Oszillatorfrequenz (fOL(t)) aus der Summe eines Durchschnittswerts (f0) und einer aus der Modulation der Quelle stammenden Modulationsfrequenz (fmod(t)) besteht, wobei die Modulationsfrequenz gemäß einer Modulationsperiode (T_{FO}) periodisch ist, wobei jede Periode K lineare Teile umfasst, die jeweils K indizierte Frequenzsteigungen αₖ aufweisen, wobei K geradzahlig und größer oder gleich 2 ist,
wobei das Schwebungssignal bei einer Abtastfrequenz f_{ech} über eine Dauer von mindestens gleich dem M-Fachen der Modulationsperiode digitalisiert wird, wobei eine abgetastete Modulationsperiode mit j indiziert wird, wobei j von 1 bis M reicht,
wobei das Verfahren die folgenden Schritte umfasst:
- **A** jede indizierte Modulationsperiode j (T_{FO}(j)) wird in eine Vielzahl von indizierten Intervallen i zerlegt, wobei i von 1 bis N reicht, und für jedes Intervall lij wird eine elementare spektrale Leistungsdichte DSP(i,j) des Schwebungssignals über dem Intervall bestimmt,
- **B** eine mittlere spektrale Leistungsdichte wird über j DSP(i) bestimmt,
- **C** wobei die N Werte von i über T_{FO} in K Intervalle Ek verteilt sind, wobei k von 1 bis K reicht, wobei ein Intervall Ek einem Steigungswert αₖ entspricht und pk Werte von i umfasst, für eine Vielzahl von i, die in einem Intervall Ek enthalten sind, wobei k ungeradzahlig ist, wird ein unterer Frequenzgrenzwert, als f_{Bk}(i) bezeichnet, der mittleren Leistungsdichte DSP(i) und ein oberer Frequenzgrenzwert, als f_{Hk}(i+pk) bezeichnet, der mittleren Leistungsdichte DSP(i+pk) bestimmt,
- **D** für jedes i der Vielzahl wird eine Strecke dk(i) und eine Geschwindigkeit des Fluids vk(i) bei der Strecke ausgehend von dem unteren und dem oberen Frequenzgrenzwert (fBk(i), fHk(i+pk)) bestimmt.

2. Verfahren nach Anspruch 1, wobei K=2 oder K=4 und wobei *α*₂ₖ = -α₂ₖ₋₁.

3. Verfahren nach einem der vorstehenden Ansprüche, wobei K größer oder gleich 4 ist, und wobei eine Vielzahl von Strecken und eine Vielzahl von Geschwindigkeiten ausgehend von einer Vielzahl von Intervallen Ek, wobei k ungeradzahlig ist, bestimmt werden, wobei das Verfahren einen zusätzlichen Schritt E umfasst, bei dem eine Strecke und eine Endgeschwindigkeit bestimmt werden, indem eine Mittelung über jeweils die Vielzahl von Strecken und die Vielzahl von Geschwindigkeiten vorgenommen wird.

4. Verfahren nach dem vorstehenden Anspruch, wobei pₖ₊₂ = pₖ gilt, wobei k ungeradzahlig ist.

5. Verfahren nach einem der vorstehenden Ansprüche, wobei jede elementare spektrale Leistungsdichte ausgehend von einer schnellen Fourier-Transformation (FFT) des Schwebungssignals bestimmt wird.

6. Verfahren nach einem der vorstehenden Ansprüche, wobei ein Intervall lij N_{FFT} Abtastpunkte umfasst und wobei die folgenden Beziehungen gelten:
| | |
|---|---|
| - für eine ausgewählte Streckenauflösung *δ*R: | $2 . δR = \frac{c . {N}_{FFT}}{{f}_{ech}}$ |
| - für eine ausgewählte Geschwindigkeitsauflösung *δ*V: | $\frac{{f}_{ech}}{{N}_{FFT}} = \frac{2 . δV}{λ}$ |
wobei C die Lichtgeschwindigkeit ist und *λ* die Wellenlänge der kohärenten Quelle ist.

7. Verfahren nach einem der vorstehenden Ansprüche, wobei ein Intervall lij N_{FFT} Abtastpunkte umfasst und wobei für eine vorbestimmte gemessene Geschwindigkeit vₘₐₓ die folgende Beziehung gilt: ${α}_{k} > \frac{2 {v}_{max}}{λ} \frac{{f}_{ech}}{{N}_{FFT}}$ wobei *λ* die Wellenlänge der kohärenten Quelle ist.

8. Verfahren nach einem der vorstehenden Ansprüche, wobei das Fluid (F) die Atmosphäre ist, die streuende Teilchen (P) umfasst, wobei das Verfahren dann ermöglicht, ein Windprofil entlang einer Beleuchtungsachse des Lidars (Z) zu bestimmen.

9. Kohärentes Lidarsystem (200), umfassend:
- eine kohärente Quelle (L), die periodisch frequenzmoduliert wird,
eine Strahlungsvorrichtung (DE) eines optischen Signals, das von der kohärenten Quelle stammt, und eine Empfangsvorrichtung (DR) eines durch ein von dem Lidar beleuchtetes, sich bewegendes Fluid (F) zurückgestrahltes Signals,
- einen Fotodetektor (D), der konfiguriert ist, um ein Schwebungssignal (Sb) ausgehend von der Interferenz zwischen einem als lokaler Oszillator bezeichneten optischen Signal, das eine lokale Oszillatorfrequenz (f_{OL}(t)) aufweist, und dem zurückgestrahlten optischen Signal zu erzeugen, wobei die lokale Oszillatorfrequenz (f_{OL}(t) ) aus der Summe eines Durchschnittswerts (f0) und einer aus der Modulation der kohärenten Quelle stammenden Modulationsfrequenz (f_{mod}(t)) besteht, wobei die Modulationsfrequenz gemäß einer Modulationsperiode (T_{FO}) periodisch ist, wobei jede Periode K lineare Teile umfasst, die jeweils K Frequenzsteigungen (αₖ) aufweisen, wobei K geradzahlig und größer oder gleich 2 ist,
eine Verarbeitungseinheit (UT), die konfiguriert ist zum:
*Digitalisieren des Schwebungssignals bei einer Abtastfrequenz f_{ech} über eine Dauer von mindestens gleich dem M-Fachen der Modulationsperiode, wobei eine abgetastete Modulationsperiode mit j indiziert wird, wobei j von 1 bis M reicht,
- Zerlegen jeder indizierten Modulationsperiode j TFO(j)) in eine Vielzahl von indizierten Intervallen i, wobei i von 1 bis N reicht, und Bestimmen, für jedes Intervall lij, einer elementaren spektralen Leistungsdichte DSP(i,j) des Schwebungssignals über dem Intervall,
- Bestimmen einer mittleren spektralen Leistungsdichte über j DSP(i),
- wobei die N Werte von i über TFO in K Intervalle Ek verteilt sind, wobei k von 1 bis K reicht, wobei ein Intervall Ek einem Steigungswert αₖ entspricht und pk Werte von i umfasst, Bestimmen, für eine Vielzahl von i, die in einem Intervall Ek enthalten sind, wobei k ungeradzahlig ist, eines unteren Frequenzgrenzwerts, als fBk(i) bezeichnet, der mittleren Leistungsdichte DSP(i) und eines oberen Frequenzgrenzwerts, als fHk(i+pk) bezeichnet, der mittleren Leistungsdichte DSP(i+pk),
- Bestimmen, für jedes i der Vielzahl, einer Strecke dk(i) und einer Geschwindigkeit des Fluids vk(i) bei der Strecke ausgehend von dem unteren und dem oberen Frequenzgrenzwert (fBk(i), fHk(i+pk)).

10. Kohärentes Lidarsystem nach dem vorstehenden Anspruch, weiter umfassend einen Isolator (C), einen Verstärker (EDFA) zum Verstärken der kohärenten Quelle und ein unausgeglichenes Interferometer (ID) zum Messen der optischen Frequenz am Ausgang des Lasers, eine erste Probenahmekomponente (L1) zum Ausrichten eines Anteils der Quelle zum unausgeglichenen Interferometer (ID) und eine zweite Probenahmekomponente (L2) zum Ausführen des lokalen Oszillators,
wobei die erste und die zweite Probenahmekomponente (L1, L2) stromabwärts des Verstärkers angeordnet sind.

11. Kohärentes Lidarsystem nach dem vorstehenden Anspruch, wobei der Isolator, das unausgeglichene Interferometer und der Detektor mikrooptisch ausgeführt sind und/oder wobei das unausgeglichene Interferometer und der Detektor in einer integrierten photonischen Schaltung (PIC) ausgeführt sind.

12. Computerprogrammprodukt, wobei das Computerprogramm Codeanweisungen umfasst, die es ermöglichen, die Schritte des Verarbeitungsverfahrens nach einem der Ansprüche 1 bis 8 durchzuführen.

## Claims

1. Method (50) for processing a signal from a coherent lidar comprising a coherent source (L) that is periodically frequency-modulated,
- a beat signal (Sb) being generated by a photodetector (D) from the interference between an optical signal called local oscillator having a local oscillator frequency (fOL(t)) and an optical signal backscattered by a moving fluid (F) illuminated by the lidar,
- the local oscillator frequency (fOL(t)) being constituted of the sum of an average value (f0) and of a modulation frequency (fmod(t)) from the modulation of the source, the modulation frequency being periodic according to a modulation period (T_{FO}), each period comprising K linear parts having respectively K frequency gradients indexed αₖ, K being even and greater than or equal to 2,
said beat signal being digitised to a sampling frequency f_{ech} over a duration at least equal to M times the modulation period, a sampled modulation period being indexed j, j varying from 1 to M,
the method comprising the following steps:
- **A** each modulation period indexed j (T_{FO}(j)) is decomposed into a plurality of intervals indexed i, i varying from 1 to N, and there is determined, for each interval lij, an elementary spectral power density DSP(i,j) of the beat signal over said interval,
- **B** there is determined an average spectral power density on j DSP(i),
- **C** the N values of i being distributed over T_{FO} in K intervals Ek, k varying from 1 to K, an interval Ek corresponding to a gradient value αₖ and comprising pk values of i, there is determined, for a plurality of i comprised in an interval Ek with k odd, a lower frequency limit, called f_{Bk}(i), of said average power density DSP(i) and an upper frequency limit, called f_{Hk}(i + pk), of the average power density DSP(i+pk),
**D** there is determined for each i of said plurality, a distance dk(i) and a velocity of the fluid vk(i) at said distance, from said lower and upper frequency limits (fBk(i), fHk(i+pk)).

2. Method according to claim 1, wherein K = 2 or K = 4 and wherein dak = -α₂ₖ₋₁.

3. Method according to any one of the preceding claims, wherein K is greater than or equal to 4, and wherein there is determined a plurality of distances and a plurality of velocity, determined from a plurality of intervals Ek with k odd, said method comprising an additional step E, wherein there is determined a distance and a final velocity by performing an average on respectively the plurality of distance and the plurality of velocity.

4. Method according to the preceding claim, wherein pₖ₊₂ = _{Pk} is had with k odd.

5. Method according to any one of the preceding claims, wherein each elementary spectral power density is determined from a Fast Fourier Transform (FFT) of the beat signal.

6. Method according to any one of the preceding claims, wherein an interval lij comprises N_{FFT} sampling points, and wherein the following relations are had:
- for a resolution in distance δR chosen: $2 . δR = \frac{c . {N}_{FFT}}{{f}_{ech}}$
- for a resolution in distance δV chosen: $\frac{{f}_{ech}}{{N}_{FFT}} = \frac{2 . δV}{λ}$
with C the speed of light and λ the wavelength of the coherent source.

7. Method according to any one of the preceding claims, wherein an interval lij comprises N_{FFT} sampling points, and wherein, for a predetermined measured velocity vₘₐₓ , the following condition is had: ${α}_{k} > \frac{2 {v}_{max}}{λ} \frac{{f}_{ech}}{{N}_{FFT}}$ with λ the wavelength of the coherent source.

8. Method according to any one of the preceding claims, wherein said fluid (F) is the atmosphere comprising diffusing particles (P), said method thus making it possible to determine a wind profile about an illumination axis of the lidar (Z).

9. Coherent lidar system (200) comprising:
- a periodically frequency-modulated coherent source (L),
- a device (DE) for transmitting an optical signal from the coherent source and a device (DR) for receiving a signal backscattered by a moving fluid (F) illuminated by the lidar,
- a photodetector (D) configured to generate a beat signal (Sb) from the interference between an optical signal called local oscillator having a local oscillator frequency (f_{OL}(t)) and the backscattered optical signal, the local oscillator frequency ( f_{OL}(t) ) being constituted of the sum of an average value (f0) and of a modulation frequency (f_{mod} (t)) from the modulation of the coherent source, the modulation frequency being periodic according to a modulation period (T_{FO}), each period comprising K linear parts having respectively K frequency gradients (αₖ), K being even and greater than or equal to 2,
- a processing unit (UT) configured to:
*digitise the beat signal, to a sampling frequency f_{ech} over a duration at least equal to M times the modulation period, a sampled modulation period being indexed j, j varying from 1 to M,
- decomposing each modulation period indexed j (TFO(j)) into a plurality of intervals indexed i, i varying from 1 to N, and determining, for each interval lij, an elementary spectral power density DSP(i,j) of the beat signal over said interval,
- determining an average spectral power density on j DSP(i),
- the N values of i being distributed over TFO in K intervals Ek, k varying from 1 to K, an interval Ek corresponding to a gradient value αₖ and comprising pk values of i, determining, for a plurality of i comprised in an interval Ek with k odd, a lower frequency limit, called fBk(i), of the average power density DSP(i) and an upper frequency limit, called fHk(i+pk), of the average power density DSP(i+pk),
determining, for each i of said plurality, a distance dk(i) and a velocity of the fluid vk(i) at said distance, from said lower and upper frequency limits (fBk(i), fHk(i+pk)).

10. Coherent lidar system according to the preceding claim, further comprising an isolator (C), an amplifier (EDFA) to amplify the coherent source and an imbalanced interferometer (ID) to measure the optical frequency at the output of the laser, a first sampling component (L1) to orient a moiety of the source towards the imbalanced interferometer (ID) and a second sampling component (L2) to produce the local oscillator,
wherein the first and second sampling components (L1, L2) are disposed downstream of the amplifier.

11. Coherent lidar system according to the preceding claim, wherein the isolator, the imbalanced interferometer and the detector are made in micro-optics and/or wherein the imbalanced interferometer and the detector are made in a photon integrated circuit (PIC).

12. Computer program product, said computer program comprising code instructions making it possible to carry out the steps of the processing method according to any one of claims 1 to 8.
